(19) Europäisches Patentamt
European Patent Office
Office européen des brevets

(11) **EP 2 302 825 A1**

(12) **EUROPEAN PATENT APPLICATION**
published in accordance with Art. 153(4) EPC

(43) Date of publication:
**30.03.2011 Bulletin 2011/13**

(51) Int Cl.:
*H04J 11/00* (2006.01)   *H04B 1/707* (2011.01)

(21) Application number: **08778216.5**

(22) Date of filing: **16.07.2008**

(86) International application number:
**PCT/JP2008/062865**

(87) International publication number:
**WO 2010/007674 (21.01.2010 Gazette 2010/03)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Umeno, Ken**
**Koganei-shi, Tokyo 184-8795 (JP)**

(72) Inventor: **Umeno, Ken**
**Koganei-shi, Tokyo 184-8795 (JP)**

(74) Representative: **Hertz, Oliver**
**v. Bezold & Partner**
**Patentanwälte**
**Akademiestrasse 7**
**80799 München (DE)**

(54) **COMMUNICATION SYSTEM, TRANSMITTER, RECEIVER AND INFORMATION RECORDING MEDIUM**

(57)    A communication system (101), which uses a primitive root "q" of a prime number "p", uses b[k] = (1, exp($2\pi i \times q^{0+k}/p$), exp($2\pi i \times q^{1+k}/p$), ..., exp($2\pi i \times q^{(p-2)+k}/p$)) for each value of an integer k=0, 1, ..., (p-2), "p" number of p-dimensional vectors b[i] each defined by b[p-1] = (1, 1, 1, ..., 1), and their conjugate complex vectors c[i]. A transmitting device (111) converts a signal to be transmitted into a parallel form, calculates the inner products between the parallel signals and the vectors b[i] respectively, inserts guard intervals to convert them into a serial form and transmits the serial signal. A receiving device (131) eliminates the guard intervals from the received signal, synchronizes with the signal, converts the signal into a parallel form, calculates the inner products between the parallel signals and the vectors c[i] respectively, converts the signals into a serial form to obtain the signal that has been transmitted.

FIG. 5

**Description**

Technical Field

The present invention relates to a communication system, a transmitting device, and a receiving device that are suitable for improving communication performance by naturally amalgamating Code Division Multiple Access (CDMA) and Orthogonary Frequency Division Multiplex (OFDM) by using a code having a complete orthogonality and a fine autocorrelation property, and a computer-readable/writable information recording medium that stores a program for realizing these on a computer.

Background Art

Conventionally, in the field of CDMA and OFDM techniques, etc., the use of an orthogonal code such as Walsh code has been proposed, while a code having autocorrelation property with a sharp peak has also been used. Meanwhile, the present inventor has proposed a chaos code as a code used for communication. This technique is disclosed in the literature identified below.

Patent Literature 1: Unexamined Japanese Patent Application KOKAI Publication No. 2002-290274

[Patent Literature 1] discloses a technique for generating an optimal chaotic spread code sequence with a simple electronic circuit.

Disclosure of Invention

Problem to be Solved by the Invention

However, there is still a high demand for a communication technique that can increase the number of channels even more by using a code that has fine orthogonality and autocorrelation property, and a high variability.

The present invention is for solving the above problem and an object of the present invention is to provide a communication system, a transmitting device, and a receiving device that are suitable for improving communication performance by naturally amalgamating CDMA and OFDM by using a code that has a complete orthogonality and a fine autocorrelation property, and a computer-readable/writable information recording medium that stores a program for realizing these on a computer.

Means for Solving the Problem

To achieve the above object, the following invention will be disclosed in accordance with the principle of the present invention.

A communication system according to a first aspect of the present invention uses:

a primitive root "q" of a prime number "p";

$b[k] = (1, \exp(2\pi i \times q^{0+k}/p), \exp(2\pi i \times q^{1+k}/p), \exp(2\pi i \times q^{2+k}/p),..., \exp(2\pi i \times q^{(p-2)+k}/p))$ for each value of an integer k=0, 1, 2, ..., (p-2), and

"p" number of p-dimensional vectors b[0], b[1], b[2], ..., b[p-2], b[p-1] each defined by b[p-1] = (1, 1, 1, 1, ..., 1); and

$c[k] = (1, \exp(-2\pi i \times q^{0+k}/p), \exp(-2\pi \times q^{1+k}/p), \exp(-2\pi i \times q^{2+k}/p), ..., \exp(-2\pi i \times q^{(p-2)+k}/p))$ for each value of an integer k=0, 1, 2, ..., (p-2), and

"p" number of p-dimensional vectors c[0], c[1], c[2], ..., c[p-2], c[p-1] each defined by c[p-1] = (1, 1, 1, 1,..., 1).

The communication system includes a transmitting device and a receiving device, which are configured as follows.

That is, the transmitting device includes a serial/parallel converting unit, a transmitting-side inner product unit, an inserting unit, and a transmitting unit.

On the other hand, the receiving device includes a receiving unit, a synchronizing unit, a receiving-side inner product unit, and a parallel/serial converting unit.

Here, the serial/parallel converting unit of the transmitting device segments a signal to be transmitted at every predetermined time length T, and converts each of resulting segmented signals from serial to parallel to obtain p-dimensional signal vectors

$$s = (s[0], s[1], s[2], s[3], \ldots, s[p-1]).$$

The transmitting-side inner product unit of the transmitting device calculates an inner product

$$w[i] = <s, b[i]>$$

between the obtained signal vector "s" and the defined vector b[i], for each value of an integer i=0, 1, 2, ..., (p-1).
Further, the inserting unit of the transmitting device inserts a guard interval between the calculated inner products w[0], w[1], w[2], ..., w[p-1] to thereby obtain a signal having the predetermined time length T.
Then, the transmitting unit of the transmitting device transmits the signal in which the guard interval has been inserted.
The receiving unit of the receiving device receives the signal that has been transmitted by the transmitting device.
The synchronizing unit of the receiving device refers to the guard interval inserted in the received signal to obtain received values

$$u[0], u[1], u[2], \ldots, u[p-1]$$

that are synchronous with the inner products

$$w[0], w[1], w[2], \ldots, w[p-1]$$

that have been calculated for the respective signals that have been segmented by the transmitting device at every aforementioned predetermined time length T.
The receiving-side inner product unit of the receiving device calculates an inner product

$$v[i] = <u[i], c[i]>$$

between the obtained received value u[i] and the defined p-dimensional vector c[i] for each value of an integer i=0, 1, 2, ..., (p-1).
Then, the parallel/serial converting unit of the receiving device converts the calculated inner products v[0], v[1], v[2], ..., v[p-1] from parallel to serial by seeing that the calculated inner products are the signals that have been segmented at every aforementioned predetermined time length T, thereby to obtain the signal that has been transmitted.
The communication system according to the present invention may use a predetermined angle θ, so that exp(iθ) may replace 1 as the top component of the vectors b[0], b[1], b[2], ..., b[p-1], and exp(-iθ) may replace 1 as the top component of the vectors c[0], c[1], c[2], ..., c[p-1].
That is, the "p" number of p-dimensional vectors b[0], b[1], b[2], ..., b[p-2], b[p-1] are defined by

$$b[k] = (\exp(i\theta), \exp(2\pi i \times q^{0+k}/p), \exp(2\pi i \times q^{1+k}/p), \exp(2\pi i \times q^{2+k}/p), \ldots, \exp(2\pi i \times q^{(p-2)+k}/p))$$

for each value of an integer k=0, 1, 2,..., (p-2) and

$$b[b-1] = (\exp(i\theta), 1, 1, 1, \ldots, 1).$$

Further, the "p" number of p-dimensional vectors c[0], c[1], c[2], ..., c[p-2], c[p-1] are defined by

$$c[k] = (\exp(-i\theta), \exp(-2\pi i \times q^{0+k}/p), \exp(-2\pi i \times q^{1+k}/p), \exp(-2\pi i \times q^{2+k}/p), ..., \exp(-2\pi i \times q^{(p-2)+k}/p))$$

for each value of an integer k=0, 1, 2, ..., (p-2), and

$$c[p-1] = (\exp(-i\theta), 1, 1, 1, ..., 1).$$

In the communication system according to the present invention, (p-1)/2 may be a prime number.

In the communication system according to the present invention, "p" may be a prime number, which is a value obtained by adding 1 to a 2's power, that is, "p" may be a prime number that satisfies $p=2^n+1$, where "n" is a given integer.

In the communication system according to the present invention, a plurality of users may be assigned with different primitive roots of the prime number "p", and the transmitting device associated with each of the plurality of users and the receiving device may use the primitive root assigned to that user as the primitive root "q".

In the communication system according to the present invention, the receiving device may use each of primitive roots, among different primitive roots of the prime number "p", that are not assigned to existing users as the primitive root "q" to calculate the inner products v[0], v[1], v[2], ..., v[p-1] and obtain a primitive root that provides a smallest power of the inner products v[0], v[1], v[2], ..., v[p-1]. And the receiving device may use the obtained primitive root as a primitive root "q" to be assigned to a new user.

Further, the communication system according to the present invention may be configured as follows.

That is, a plurality of users are assigned with different primitive roots of the prime number "p", and the transmitting device associated with each of the plurality of users uses the primitive root assigned to that user as the primitive root "q".

On the other hand, the receiving device uses each of the different primitive roots as the primitive root "q" to calculate the inner products v[0], v[1], v[2], ..., v[p-1] and obtain a primitive root that provides a largest power of the inner products v[0], v[1], v[2], ..., v[p-1], and uses the obtained primitive root as the primitive root "q".

A transmitting device according to another aspect of the present invention is the transmitting device in the above-described communication system.

A receiving device according to another aspect of the present invention is the receiving device in the above-described communication system.

A computer-readable information recording medium according to another aspect of the present invention stores a program that controls a computer having a communication function to function as the transmitting device described above.

A computer-readable information recording medium according to another aspect of the present invention stores a program that controls a computer having a communication function to function as the receiving device described above.

As the computer-readable information recording medium, for example, those that are the same type as a compact disk, a flexible disk, a hard disk, those that are the same type as a magneto optical disk, those that are the same type as a digital video disk, a magnetic tape, a semiconductor memory, or the like may be used.

The information recording medium described above may be distributed or sold independently from a computer, or the program by itself may be distributed or sold via a computer communication network such as the Internet, etc.

The present invention is the product of research and development activities for a subject "Research and Development of Chips for ICA Communication" that is adopted by Japan New Energy and Industrial Technology Development Organization (NEDO) for the 2nd industrial technology research promotion project for the year 2005.

Effect of the Invention

According to the present invention, it is possible to provide a communication system, a transmitting device, and a receiving device that are suitable for improving communication performance by naturally amalgamating CDMA and OFDM by using a code that has a complete orthogonality and a fine autocorrelation property, and a computer-readable information recording medium that stores a program for realizing these on a computer.

Brief Description of Drawings

[Fig. 1] It is a transition diagram of codes based on a prime number "p"=59 and a primitive root "q"=31.
[Fig. 2] It is a transition diagram of codes based on a prime number "p"=59 and a primitive root "q"=11.

[Fig. 3] It is a transition diagram of codes based on a prime number "p"=173 and a primitive root "q"=11.

[Fig. 4] It is a transition diagram of codes based on a prime number "p"=173 and a primitive root "q"=3.

[Fig. 5] It is an explanatory diagram showing a schematic structure of a communication system according to one embodiment of the present invention.

[Fig. 6] It is an explanatory diagram showing a conversion process of a signal according to the present embodiment.

Explanation of Reference Numerals

| | |
|---|---|
| 101 | communication system |
| 111 | transmitting device |
| 112 | serial/parallel converting unit |
| 113 | transmitting-side inner product unit |
| 114 | inserting unit |
| 115 | transmitting unit |
| 131 | receiving device |
| 132 | receiving unit |
| 133 | synchronizing unit |
| 134 | receiving-side inner product unit |
| 135 | parallel/serial converting unit |
| 601 | signal to be transmitted |
| 602 | signal vector |
| 603 | inner product value vector |
| 604 | outgoing signal |
| 605 | incoming signal |
| 606 | received value vector |
| 607 | inner product value vector |
| 608 | signal that has been transmitted |
| 651 | guard interval |
| 652 | received guard interval |

Best Mode for Carrying Out the Invention

Embodiments of the present invention will be explained below. The embodiments to be shown below is intended for explanation, and not to limit the scope of the present invention. Therefore, though those with ordinary skill in the art could employ embodiments obtained by replacing individual components or all the components of the embodiments below with equivalents of those, such embodiments will also be included in the scope of the present invention.

Embodiment 1

In the present embodiment, a chaos code that takes a value on the unit circle in a complex plane will be used as an orthogonal code. The present inventor has devised the method of generating such a chaos code. A detailed explanation will now be given below.

In a case where a set, shown below, of a given integer "q" which is in relation with a given prime number "p"

$$\{q^0 \bmod p,\ q^1 \bmod p,\ q^2 \bmod p,\ \ldots,\ q^{p-2} \bmod p\}$$

equals a set of (p-1) number of natural numbers, shown below

$$\{1,\ 2,\ 3,\ \ldots,\ p-1\},$$

in other words, in a case where a map below

$$f_{p,q}(k) = q^{k-1} \bmod p,$$

whose domain is

$$\{1, 2, 3, …, p\text{-}1\},$$

has a codomain, which is also

$$\{1, 2, 3, …, p\text{-}1\},$$

and further in a case where the map $f_{p,q}(\cdot)$ is bijective, the integer "q" is said to be a primitive root of the prime number "p".

The map $f_{p,q}(\cdot)$ can be considered to be a permutation that rearranges the order of the natural numbers 1 to p-1. For example, where p=61 and q=2, calculation of $f_{p,q}(k)$ for each value of k=1, 2, ..., p-1=60 in this order results in
1, 2, 4, 8, 16, 32, 3, 6, 12, 24, 48, 35, 9,
18, 36, 11, 22, 44, 27, 54, 47, 33, 5, 10,
20, 40, 19, 38, 15, 30, 60, 59, 57, 53, 45,
29, 58, SS, 49, 37, 13, 26, 52, 43, 25, 50,
39, 17, 34, 7, 14, 28, 56, 51, 41, 21, 42,
23, 46, 31,
which can be said to be an order rearrangement of the natural numbers 1 to 60.

In general, the number of primitive roots "q" of a prime number "p" is given by $\phi$(p-1), based on an Euler's totient function $\phi(\cdot)$. Where "p" sequentially takes the value of every prime number that exists from 2 to 1223, the pairs of the prime number "p" and the number $\phi$(p-1) of its primitive roots "q", namely (p, $\phi$(p-1)) are as follows:

(2, 1), (3, 1), (5, 2)*, (7, 2)*, (11, 4)*,
(13, 4), (17, 8)*, (19, 6), (23, 10)*, (29, 12),
(31, 8), (37, 12), (41, 16), (43, 12), (47, 22)*,
(53, 24), (59, 28)*, (61, 16), (67, 20), (71, 24),
(73, 24), (79, 24), (83, 40)*, (89, 40), (97, 32),
(101, 40), (103, 32), (107, 52)*, (109, 36), (113, 48),
(127, 36), (131, 48), (137, 64), (139, 44), (149, 72)*,
(151, 40), (157, 48), (163, 54), (167, 82)*, (173, 84),
(179, 88)*, (181, 48), (191, 72), (193, 64), (197, 84),
(199, 60), (211, 48), (223, 72), (227, 112)*, (229, 72),
(233, 112), (239, 96), (241, 64), (251, 100), (257, 128)*,
(263, 130)*, (269, 132), (271, 72), (277, 88), (281, 96),
(283, 92), (293, 144), (307, 96), (311, 120), (313, 96),
(317, 156), (331, 80), (337, 96), (347, 172)*, (349, 112),
(353, 160), (359, 178)*, (367, 120), (373, 120), (379, 108),
(383, 190)*, (389, 192), (397, 120), (401, 160), (409, 128),
(419, 180), (421, 96), (431, 168), (433, 144), (439, 144),
(443, 192), (449, 192), (457, 144), (461, 176), (463, 120),
(467, 232)*, (479, 238)*, (487, 162), (491, 168), (499, 164),
(503, 250)*, (509, 252), (521, 192), (523, 168), (541, 144),
(547, 144), (557, 276), (563, 280)*, (569, 280), (571, 144),
(577, 192), (587, 292)*, (593, 288), (599, 264), (601, 160),
(607, 200), (613, 192), (617, 240), (619, 204), (631, 144),
(641, 256), (643, 212), (647, 288), (653, 324), (659, 276),
(661, 160), (673, 192), (677, 312), (683, 300), (691, 176),
(701, 240), (709, 232), (719, 358)*, (727, 220), (733, 240),
(739, 240), (743, 312), (751, 200), (757, 216), (761, 288),

(769, 256), (773, 384), (787, 260), (797, 396), (809, 400),
(811, 216), (821, 320), (823, 272), (827, 348), (829, 264),
(839, 418), (853, 280), (857, 424), (859, 240), (863, 430),
(877, 288), (881, 320), (883, 252), (887, 442)*, (907, 300),
(911, 288), (919, 288), (929, 448), (937, 288), (941, 368),
(947, 420), (953, 384), (967, 264), (971, 384), (977, 480),
(983, 490), (991, 240), (997, 328), (1009, 288), (1013, 440),
(1019, 508)*, (1021, 256), (1031, 408), (1033, 336), (1039, 344),
(1049, 520), (1051, 240), (1061, 416), (1063, 348), (1069, 352),
(1087, 360), (1091, 432), (1093, 288), (1097, 544), (1103, 504),
(1109, 552), (1117, 360), (1123, 320), (1129, 368), (1151, 440),
(1153, 384), (1163, 492), (1171, 288), (1181, 464), (1187, 592)*,
(1193, 592), (1201, 320), (1213, 400), (1217, 576), (1223, 552).

Among the pairs, those superscripted with * are considered to be "fine" pairs in which the prime number "p" has a relatively large number $\phi(p-1)$ of primitive roots "q".

For example, the number of primitive roots "q" of a prime number "p" whose expression (p-1)/2 is also a prime number is (p-3)/2, i.e., on the order of about p/2.

A consideration will now be given to:

$$b[k] = (1, \exp(2\pi i \times q^{0+k}/p), \exp(2\pi i \times q^{1+k}/p), \exp(2\pi i \times q^{2+k}/p), \ldots, \exp(2\pi i \times q^{(p-2)+k}/p))$$

for each value of an integer k=0, 1, 2, ..., (p-2), where "p" is a prime number, and "q" is a primitive root of the prime number, and
"p" number of p-dimensional vectors b[0], b[1], b[2], ..., b[p-2], b[p-1] each defined by b[p-1] = (1, 1, 1, 1, ..., 1); and

$$c[k] = (1, \exp(-2\pi i \times q^{0+k}/p), \exp(-2\pi i \times q^{1+k}/p), \exp(-2\pi i \times q^{2+k}/p), \ldots, \exp(-2\pi i \times q^{(p-2)+k}/p))$$

for each value of an integer k=0, 1,2, ..., (p-2), and
"p" number of p-dimensional vectors c[0], c[1], c[2], ..., c[p-2], c[p-1] each defined by c[p-1] = (1, 1, 1, 1,..., 1).

When these vectors are used as codes, they will obviously be codes with a constant power, since each component of the vectors takes a value on the unit circle in a complex plane.

Further, b[k] and c[k] are complex conjugate vectors with their every pair of corresponding components being in a relationship of complex conjugation. Their inner product satisfies

$$\langle b[k], c[k] \rangle = p.$$

Meanwhile, where i≠j, the inner product satisfies

$$\langle b[i], c[j] \rangle = 0.$$

Hence, a complex square matrix in which

$$b[0], b[1], \ldots, b[p-1]$$

are arranged with the components of each of them multiplied by $1/p^{1/2}$, and a complex square matrix in which

$$c[0], c[1], \ldots, c[p\text{-}1]$$

are arranged with the components of each of them multiplied by $1/p^{1/2}$ are unitary matrices that are complex orthogonal matrices.

That is to say, when a transmitting side transforms "p" pieces of data by

$$b[0], b[1], \ldots, b[p\text{-}1]$$

(or by the unitary matrix corresponding to these vectors), a receiving side can obtain the original "p" pieces of data by transforming the thusly transformed data by

$$c[0], c[1], \ldots, c[p\text{-}1]$$

(or by the unitary matrix corresponding to these vectors).

In this way, the present inventor has succeeded in generating "p" number of p-dimensional complex vectors that are completely orthogonal to one another, based on a prime number "p" and its primitive root "q".

The number of such orthogonal vector systems is given by the number of primitive roots "q". Hence, the larger the number of primitive roots "q", the larger the number of channels that are used simultaneously for communication can be. From this viewpoint, more suitable prime numbers "p" are considered to be those in the aforementioned "fine" pairs superscripted with *.

Note that where $k \leq p\text{-}2$ and $n \geq 2$, the n-th component of the above-described vector b[k] can be calculated by a function

$$e_{p,q,k}(n) = \exp(2\pi i \times q^{n+k-1}/p),$$

while where "k" is equal to or smaller than (p-1) and "n" is equal to or larger than 2, a relationship

$$Re(e(n+1)) = T_q(Re(e(n)))$$

is established based on a Chebyshev polynomial $T_q(\cdot)$ whose order is the primitive root "q".

Since a Chebyshev polynomial whose order is 2 or higher is known to be a chaotic map, the components of the codes of the present invention show a chaotic behavior. It is known that Lyapunov exponent or Kolmogorov-Sinai Entropy of chaos is Log q, and the same single prime number "p" will generate orthogonal vectors that show different chaotic behaviors if different primitive roots "q" are used.

Among the above listed "fine" pairs, (5, 2,), (17, 8), and (257, 128) can have their prime number "p" expressed as a 2's power to which 1 is added ($p=2^n+1$). In a case where such a prime number "p" is used, the components of the above-described vectors, when located on the circumference of the unit circle, will be on the vertices of a regular polygon having "p" number of corners that can be drawn by a pair of compasses and a triangle ruler. Since the number of primitive roots is (p-1)/2, a relatively large variety of primitive roots are available, and this is "fine".

In the following explanation, a further look into the property of the codes of the present invention will be given with reference to transition diagrams.

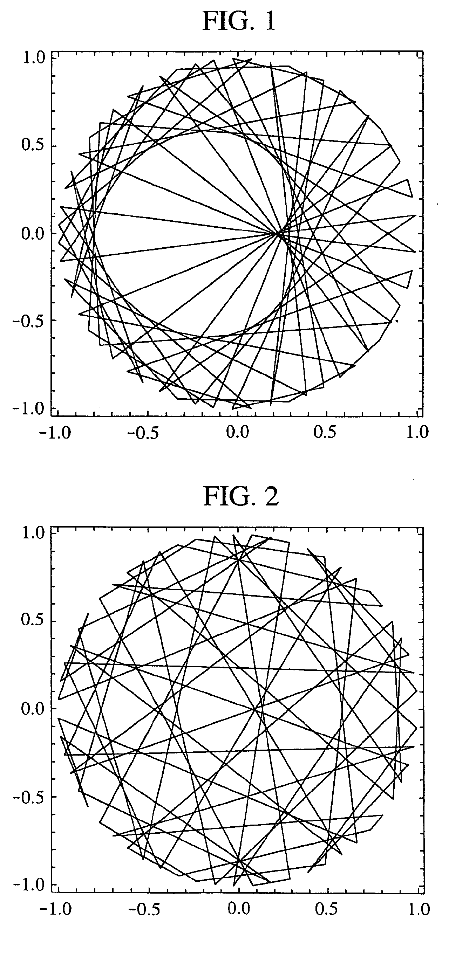

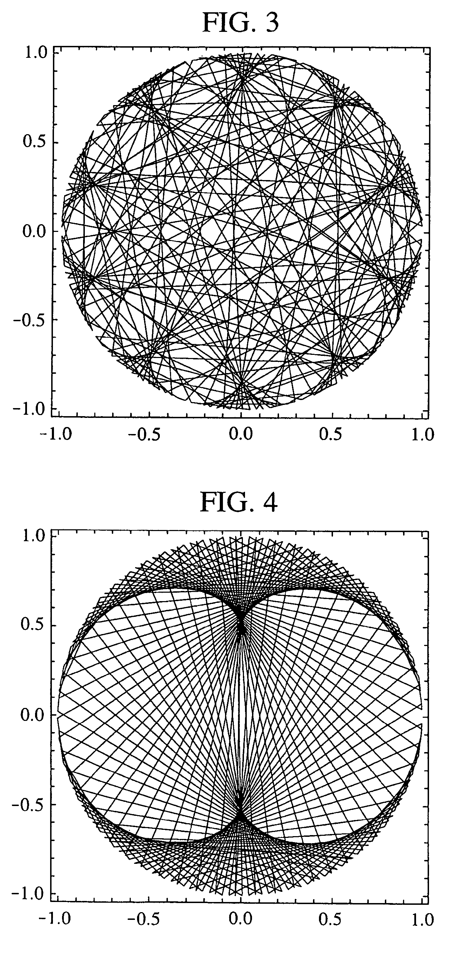

Fig. 1 is a transition diagram of codes that are based on a prime number "p" =59, and a primitive root "q"=31. Fig. 2 is a transition diagram of codes that are based on a prime number "p"=59 and a primitive root "q"=11. Fig. 3 is a transition diagram of codes that are based on a prime number "p"=173, and a primitive root "q"=11. Fig. 4 is a transition diagram of codes that are based on a prime number "p"=173, and a primitive root "q"=3. The following explanation will be given with reference to these diagrams.

The diagrams are obtained by joining points on a complex plane that represent codes obtained in the above-described manner.

Discrete Fourier transform used in OFDM will also generate orthogonal vectors, which will draw a similar diagram. However, the figure of the diagram will be very highly revolution-symmetric. That is, the revolution angle by which the figure is revolved to end up being overlaid on the original shape is so small that such near overlays occur many times in a 360-degree revolution. Here, the high revolution symmetric property of the state transition diagram of conventional orthogonal codes shows that these codes generally have a poor autocorrelation property.

On the other hand, as can be understood from Fig. 1 to Fig. 4, the transition destination points are distributed on the circumference of the unit circle evenly, but revolution-asymmetrically. That is, the revolution symmetric property is by far lower than that of the transition diagram of orthogonal codes used in OFDM. That is, the number of times the revolution ends in near overlay on the original shape in the process of revolving the figure by 360 degrees is very small, from once to several times.

Hence, it can be understood that owing to their revolution asymmetric property, the codes of the present invention have a finer autocorrelation property than that of conventional general orthogonal codes.

Actual calculation shows that the autocorrelation property of b[0], b[1], ..., b[p-2] and c[0], c[1], ..., c[p-2] has a second peak whose absolute value, when raised to the second power, is equal to or smaller than $\left(2\sqrt{2}\right)^2 = 8$, regardless of the code length "p".

Considering that the second power value of the absolute value of the maximum peak is equal to the second power value of the code length "p", it is possible to secure a sufficient separation between the maximum peak and the second peak, by using a sufficiently large value as the prime number "p".

For example, in a case where p=59, the second power value of the absolute value of the second peak is about 1/500 of the second power value of the absolute value of the maximum peak. Even in a case where p=3, this is about 1/3.

Thus, it is possible to say that the autocorrelation property of the codes of the present invention is much finer than that of conventional techniques.

Note that it has also been shown by calculation that vectors that are generated based on different primitive roots "q" of the same prime number "p" have a fine correlation property.

For example, where a prime number "p"=59, a given vector (other than those vectors whose components are all 1) that is based on a selected primitive root of 6, and all the vectors (other than those vectors whose components are all 1) that are based on a selected primitive root of 2 have an intercorrelation property in which the maximum value of the absolute value is 14.93.

Where a prime number "p"=59, a given vector (other than those vectors whose components are all 1) that is based on a selected primitive root of 2, and all the vectors (other than those vectors whose components are all 1) that are based on a selected primitive root of 10 have an intercorrelation property in which the maximum value of the absolute value is 14.99.

These values are sufficiently smaller than the code length of 59.

Hence, it can be understood that the codes of the present invention show a very fine communication performance when different primitive roots of a given selected prime number "p" are assigned to respective users so that each and every user may communicate through p-1 number of channels at the maximum.

Now, the configuration of a specific communication system will be explained.

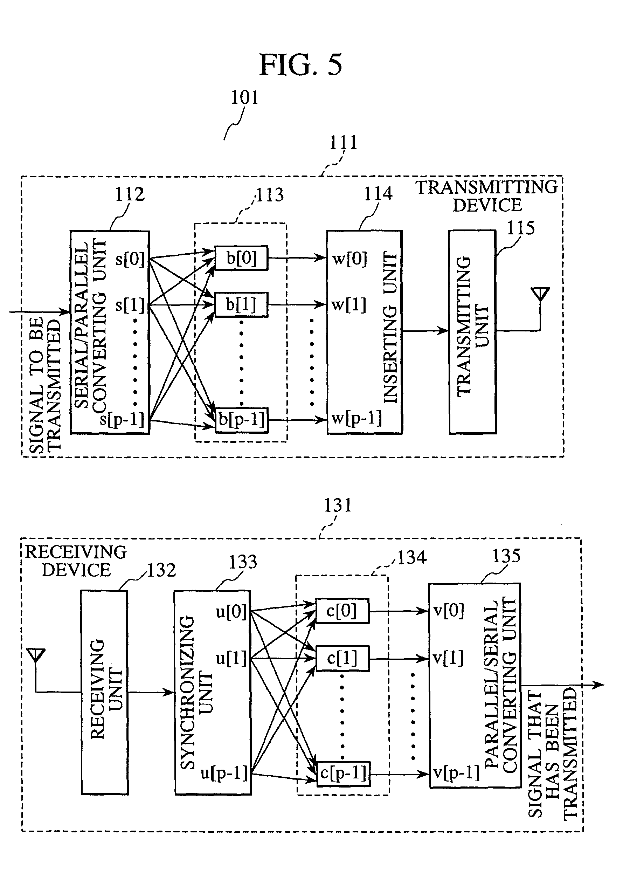

Fig. 5 is an explanatory diagram showing a schematic configuration of a communication system according to one embodiment of the present invention. The following explanation will be given with reference to this diagram.

The communication system 101 shown in Fig. 5 has a transmitting device 111 and a receiving device 131.

Here, the communication system 101 uses a given primitive root "q" of a given prime number "p". These values "p" and "q" can be appropriately selected in the manner described above.

The transmitting device 111 uses

$$b[k] = (1, \exp(2\pi i \times q^{0+k}/p), \exp(2\pi i \times q^{1+k}/p), \exp(2\pi i \times q^{2+k}/p), ..., \exp(2\pi i \times q^{(p-2)+k}/p))$$

for each value of an integer k=0, 1,2, ..., (p-2), and
"p" number of p-dimensional vectors b[0], b[1], b[2], ..., b[p-2], b[p-1] each defined by b[p-1] = (1,1,1,1, ..., 1).

On the other hand, the receiving device 131 uses

$$c[k] = (1, \exp(-2\pi i \times q^{0+k}/p), \exp(-2\pi i \times q^{1+k}/p), \exp(-2\pi i \times q^{2+k}/p), ..., \exp(-2\pi i \times q^{(p-2)+k}/p))$$

for each value of an integer k=0, 1, 2, ..., (p-2), and

"p" number of p-dimensional vectors c[0], c[1], c[2], ..., c[p-2], c[p-1] each defined by c[p-1] = (1,1, 1, 1,..., 1).

The product between a matrix in which b[0], b[1], b[2], ..., b[p-2], b[p-1] are arranged and a matrix in which c[0], c[1], c[2], ..., c[p-2], c[p-1] are arranged is a "p" multiple of a unit matrix. Hence, instead of the above definitions, the components of each vector may be multiplied by an appropriate nonzero constant. This is allowed because to multiply by a constant merely means to change the scale of the values.

The transmitting device 111 includes a serial/parallel converting unit 112, a transmitting-side inner product unit 113, an inserting unit 114, and a transmitting unit 115.

On the other hand, the receiving device 131 includes a receiving unit 132, a synchronizing unit 133, a receiving-side inner product unit 134, and a parallel/serial converting unit 135.

Here, the serial/parallel converting unit 112 of the transmitting device 111 segments a signal to be transmitted at every predetermined time length T, and converts each of these segmented signals from serial to parallel to obtain the following p-dimensional signal vectors

$$s = (s[0], s[1], s[2], s[3], ..., s[p-1]).$$

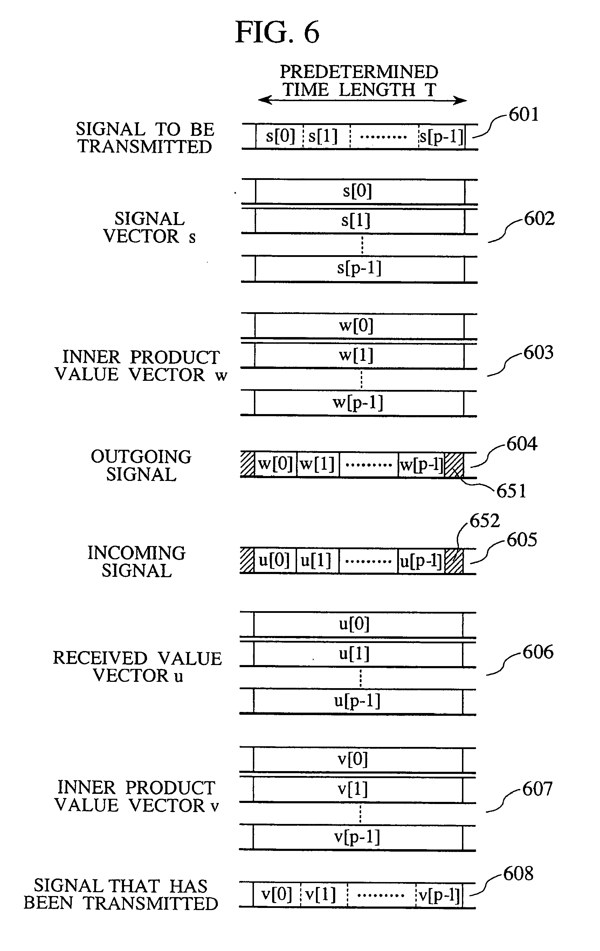

Fig. 6 is an explanatory diagram showing the conversion process of the signal. The following explanation will be given with reference to this diagram.

Typically, a signal 601 to be transmitted includes "p" number of signal values per a predetermined time length T. The signal 601 to be transmitted may be of such kinds as a binary signal including values that are either +1 or -1, a binary signal including values that are either +1 or 0, a signal converted by a multivalued signal for 16 QAM, etc., that use combination of amplitude and phase, etc.

These signal values will be transformed to signal vectors 602 that are "p" sequences of signal values s[0], s[1], s[2], s[3], ..., s[p-1] each having the predetermined time length T.

Meanwhile, the transmitting-side inner product unit 113 of the transmitting device 111 calculates the inner product

$$w[i] = <s, b[i]>$$

between the obtained signal vector "s" and the defined vector b[i], for each value of the integer i=0, 1, 2, ..., (p-1). This calculation can be done at every aforesaid predetermined time length T. The transmitting-side inner product unit 113 will output inner product value vectors 603 that are "p" sequences of inner product values w[0], w[1], w[2], w[3], ..., w[p-1] each having the predetermined time length T.

Then, the inserting unit 114 of the transmitting device 111 inserts a guard interval between the calculated inner products w[0], w[1], w[2], ..., w[p-1] to make a signal having the predetermined time length T.

The inserting unit 114 performs a kind of parallel/serial conversion function, to convert the "p" number of inner product value vectors 603 to the signal values of one outgoing signal 604. Here, the inserting unit 114 inserts an appropriate guard interval so that the receiving device 131 can synchronize with the signal.

In the example shown in Fig. 6, one guard interval 651 is inserted at the end of the predetermined time length T. However, it is also possible to use an approach that appropriately inserts an interval between each two of the inner products w[0], w[1], w[2], ..., w[p-1], or the like.

Then, the transmitting unit 115 of the transmitting device 111 transmits the outgoing signal 604 in which the guard intervals have been inserted.

The receiving unit 132 of the receiving device 131 receives an incoming signal 605, which is the outgoing signal 604 transmitted by the transmitting device 111 that has changed as influenced by the radio paths.

The synchronizing unit 133 of the receiving device 131 refers to guard intervals 652 in the received incoming signal 605, which are the guard intervals 651 in the outgoing signal 604 as influenced by the radio paths, and obtains received values

$$u[0], u[1], u[2], ..., u[p-1]$$

that are synchronous with the inner products

$$w[0], w[1], w[2], \ldots, w[p-1]$$

that have been calculated by the transmitting device 111 for the respective signals segmented at every aforesaid predetermined time length T.

Since the guard intervals are inserted at the cycle T as described above, it is possible to obtain synchronous values by building a correlation between the time elapse of the incoming signal and the temporal distribution of the guard intervals.

The received values u[0], u[1], u[2], ..., u[p-1] are "p" number of signals 606 (received value vectors "u") each having the predetermined time length T.

The receiving-side inner product unit 134 of the receiving device 131 calculates the inner product

$$v[i] = <u[i], c[i]>$$

between the obtained received value u[i] and the defined p-dimensional vector c[i] for each value of an integer i=0, 1, 2, ..., (p-1).

This inner value calculation is done at every predetermined time length T likewise in the transmitting-side inner product unit 113, resulting in that "p" number of signals 607 (inner product value vectors "v"), namely v[0], v[1], v[2], ..., v[p-1] are obtained.

Then, the receiving-side inner product unit 134 of the receiving device 131 converts the calculated inner products v[0], v[1], v[2], ..., v[p-1] from parallel to serial seeing that these are signals segmented at every aforesaid predetermined time length T, thereby to obtain a signal 608 that has been transmitted. The signal 608 corresponds to the binary signal, the multivalued signal, or the like, and generally has incurred some shifts in the phase and amplitude due to the influence of the radio paths. To compensate for such shifts, various known techniques may be used.

As can be understood, instead of performing Fourier transform of OFDM, the present communication system 101 performs calculations for obtaining inner products with vectors whose components are the values that indicate a point on the unit circle as described above. This can be considered to be natural amalgamation between OFDM and CDMA.

It is possible to implement the various calculations involved in the communications, by reading into an electronic circuit such as a Field Programmable Gate Array (FPGA), an Application Specific Integrate Circuit (ASIC), or the like a predetermined program (equivalent to the design diagram of the electronic circuit), and applying a software radio technique, etc.

Further, by executing a program on an ordinary computer, etc., it is possible to cause the calculations of the serial/parallel converting unit 112, the transmitting-side inner product unit 113, and the inserting unit 114 of the transmitting device 111 and the calculations of the synchronizing unit 133, the receiving-side inner product unit 134, and the parallel/serial converting unit 135 of the receiving device 131 to be performed. In this case, the transmitting unit 115 and the receiving unit 132 are embodied by a radio communication module connected to the computer.

In what follows, an embodiment that is a modified or developed version of the above embodiment will be explained.

Embodiment 2

In the above embodiment, the top component of the vectors b[0], b[1], ..., b[p-1] and the vectors c[0], c[1], ..., c[p-1] is 1. However, the top component is of an arbitrary nature, and it is enough if the top component is on the circumference of the unit circle in the complex plane.

Hence, the vectors b[0], b[1], ..., b[p-1] and the vectors c[0], c[1], ..., c[p-1] may be defined as below with the use of an arbitrary angle θ.

That is, "p" number of p-dimensional vectors b[0], b[1], b[2], ..., b[p-2], b[p-1] are defined by

$$b[k] = (\exp(i\theta), \exp(2\pi i \times q^{0+k}/p), \exp(2\pi i \times q^{1+k}/p), \exp(2\pi i \times q^{2+k}/p), \ldots, \exp(2\pi i \times q^{(p-2)+k}/p))$$

for each value of an integer k=0, 1, 2, ..., (p-2), and

$$b[b-1] = (\exp(i\theta), 1, 1, 1, \ldots, 1).$$

Further, "p" number of p-dimensional vectors c[0], c[1], c[2], ..., c[p-2], c[p-1] are defined by

$$c[k] = (\exp(-i\theta), \exp(-2\pi i \times q^{0+k}/p), \exp(-2\pi i \times q^{1+k}/p), \exp(-2\pi i \times q^{2+k}/p), \ldots, \exp(-2\pi i \times q^{(p-2)+k}/p))$$

for each value of an integer k=0, 1, 2, ..., (p-2), and

$$c[p-1] = (\exp(-i\theta), 1, 1, 1, \ldots, 1).$$

Embodiment 3

In the above embodiment, assumed is the pair of the transmitting device 111 and the receiving device 131 that use a fixed primitive root "q" of a prime number "p". Here, with the use of the same single prime number, multi-user communications become available. This can be considered as an equivalent of Orthogonal Frequency Division Multiple Access (OFDMA).
The number of primitive roots of a prime number "p" is $\phi(p-1)$ as described above, and a prime number "p" that has many primitive roots can be selected as described above.
That is, any different ones of the following primitive roots

$$q_1, q_2, \ldots, q_{\phi(p-1)}$$

of a given prime number "p" are assigned to different users such that no same one is assigned to more than one users.
Every user performs transmission by using the primitive root $q_i$ assigned to him/herself as the primitive root "q" in the above embodiment.
The receiving device 131 performs reception by using each of $q_1$, $q_2$, ..., $q\phi(p-1)$ that is assigned to any user as the primitive root "q" in the above embodiment.
This assignment enables an OFDMA-like function to be realized in the transmission from many mobile terminals (corresponding to the transmitting device 111) to a base station (corresponding to the receiving device 131).
Transmission from the base station to each of many mobile terminals may follow the above process in the opposite way.
As is obvious, one fixed prime number "p" can realize a multi-user communication system that can accept up to $\phi(p-1)$ number of users in total.
In such a communication system, the number of users may dynamically change. In such a case, the base station assigns a primitive root to a new user in the following manner.
That is, each of the primitive roots, among the different primitive roots of the prime number "p", that are not assigned to any existing users is used as the primitive root "q" to calculate inner products v[0], v[1], v[2], ..., v[p-1] in the current radio path conditions. Then, the power of the inner products v[0], v[1], v[2], ..., v[p-1] is calculated.
The power is typically the sum of the second power values of the respective v[0], v[1], v[2], ..., v[p-1], or the sum of the second power values of their absolute values. The power shows the correlation value in the current communication conditions.
Then, the primitive root that acquires the smallest power is obtained. This primitive root will generate the smallest correlation in the current radio path conditions and thus can be considered to be the most interference-proof.
Then, the obtained primitive root is determined as the primitive root "q" that is assigned to the new user.
Once the primitive root assigned to the user is determined, the transmitting device 111 of that user and the receiving device 131 can start communications after the both make initial settings of the vectors b[0], b[1], ..., b[p-1] and the vectors c[0], c[1], ..., c[p-1] respectively, using the determined primitive root as the primitive root "q".
When a prime number "p" whose expression (p-1)/2 is also a prime number is selected for performing such multi-user communications, the number of its primitive roots "q" is (p-3)/2, which means that many users can be accepted.

When the base station or the receiving device 131 communicates with any one of the plurality of transmitting devices 111 associated with the primitive roots $q_1$, $q_2$, ..., $q_{\phi(p-1)}$ respectively, it performs reception by using each of $q_1$, $q_2$, ..., $q_{\phi(p-1)}$ as the primitive root "q" of the above embodiment, then calculates the power of the inner products v[0], v[1], v[2], ..., v[p-1] likewise in the above example.

Then, the base station may perform the following reception and communication processes, by estimating that the primitive root that acquires the largest power is the primitive root "q" that is used by the transmitting device 111 in the ongoing communication session.

Industrial Applicability

As explained above, according to the present invention, it is possible to provide a communication system, a transmitting device, and a receiving device that are suitable for improving communication performance by naturally amalgamating CDMA and OFDM by using a code that has a complete orthogonality and a fine autocorrelation property, and a computer-readable information recording medium that stores a program for realizing these on a computer.

**Claims**

1. A communication system (101) that uses:

   a primitive root q of a prime number p;

$$b[k] = (1, \exp(2\pi i \times q^{0+k}/p), \exp(2\pi i \times q^{1+k}/p), \exp(2\pi i \times q^{2+k}/p), ..., \exp(2\pi i \times q^{(p-2)+k}/p))$$

   for each value of an integer k=0, 1, 2, ..., (p-2) and
   p number of p-dimensional vectors b[0], b[1], b[2], ..., b[p-2], b[p-1] each defined by b[p-1]= (1, 1, 1, 1, ..., 1); and

$$c[k] = (1, \exp(-2\pi i \times q^{0+k}/p), \exp(-2\pi i \times q^{1+k}/p), \exp(-2\pi i \times q^{2+k}/p), ..., \exp(-2\pi i \times q^{(p-2)+k}/p))$$

   for each value of an integer k=0, 1, 2, ..., (p-2) and
   p number of p-dimensional vectors c[0], c[1], c[2], ..., c[p-2], c[p-1] each defined by c[p-1] = (1, 1, 1, 1,..., 1),
   said communication system (101) comprising a transmitting device (111) and a receiving device (131),
   wherein (a) said transmitting device (111) includes:

   a serial/parallel converting unit (112) that segments a signal to be transmitted at every predetermined time length T, and converts each of resulting segmented signals from serial to parallel to obtain p-dimensional signal vectors

$$s = (s[0], s[1], s[2], s[3], ..., s[p-1]);$$

   a transmitting-side inner product unit (113) that calculates an inner product

$$w[i] = <s, b[i]>$$

   between the obtained signal vector s and the vector b[i] defined above, for each value of an integer i=0, 1, 2, ..., (p-1);
   an inserting unit (114) that inserts a guard interval between the calculated inner products w[0], w[1], w[2], ..., w[p-1] to thereby obtain a signal having the predetermined time length T; and
   a transmitting unit (115) that transmits the signal in which the guard interval has been inserted, and wherein (b) said receiving device (131) includes:

a receiving unit (132) that receives the signal that has been transmitted by said transmitting device (111);
a synchronizing unit (133) that refers to the guard interval inserted in the received signal to obtain received values

$$u[0], u[1], u[2], \ldots, u[p\text{-}1]$$

that are synchronous with the inner products

$$w[0], w[1], w[2], \ldots, w[p\text{-}1]$$

that have been calculated for the respective signals that have been segmented by said transmitting device (111) at every said predetermined time length T;
a receiving-side inner product unit (134) that calculates an inner product

$$v[i] = <u[i], c[i]>$$

between the obtained received value $u[i]$ and the p-dimensional vector $c[i]$ defined above, for each value of an integer i=0, 1, 2., ..., (p-1); and
a parallel/serial converting unit (135) that converts the calculated inner products $v[0], v[1], v[2], ..., v[p\text{-}1]$ from parallel to serial by seeing that the calculated inner products are the signals that have been segmented at every said predetermined time length T, thereby to obtain the signal that has been transmitted.

2. The communication system (101) according to claim 1,
wherein based on a predetermined angle $\theta$,
$\exp(i\theta)$ replaces 1 as a top component of the vectors $b[0], b[1], b[2], ..., b[p\text{-}1]$ i, and
$\exp(-i\theta)$ replaces 1 as a top component of the vectors $c[0], c[1], c[2], ..., c[p\text{-}1]$.

3. The communication system (101) according to claim 1 or 2,
wherein $(p\text{-}1)/2$ is a prime number.

4. The communication system (101) according to claim 1 or 2,
wherein p is a prime number, which is a value obtained by adding 1 to a 2's power.

5. The communication system (101) according to claim 1 or 2,
wherein a plurality of users are assigned with different primitive roots of the prime number p, and said transmitting device (111) associated with each of the plurality of users and said receiving device (131) use the primitive root assigned to that user as the primitive root q.

6. The communication device (101) according to claim 5,
wherein said receiving device (131) uses each of primitive roots, among different primitive roots of the prime number p, that are not assigned to existing users as the primitive root q to calculate the inner products $v[0], v[1], v[2], ..., v[p\text{-}1]$ and obtain a primitive root that provides a smallest power of the inner products $v[0], v[1], v[2], ..., v[p\text{-}1]$, and said receiving device (131) uses the obtained primitive root as a primitive root q to be assigned to a new user.

7. The communication device (101) according to claim 1 or 2,
wherein a plurality of users are assigned with different primitive roots of the prime number p, and said transmitting device (111) associated with each of the plurality of users uses the primitive root assigned to that user as the primitive root q, and
said receiving device (131) uses each of the different primitive roots as the primitive root q to calculate the inner products $v[0], v[1], v[2], ..., v[p\text{-}1]$ and obtain a primitive root that provides a largest power of the inner products $v[0], v[1], v[2], ..., v[p\text{-}1]$, and uses the obtained primitive root as the primitive root q.

8. A transmitting device (111) in said communication system (101) according to claim 1 or 2.

9. A receiving device (131) in said communication system (101) according to claim 1 or 2.

10. A computer-readable information recording medium that stores a program that controls a computer to function as said transmitting device (111) in said communication system (101) according to claim 1 or 2.

11. A computer-readable information recording medium that stores a program that controls a computer to function as said receiving device 131) in said communication system (101) according to claim 1 or 2.

## FIG. 1

## FIG. 2

## FIG. 3

## FIG. 4

# FIG. 5

# FIG. 6

PREDETERMINED
TIME LENGTH T

SIGNAL TO BE
TRANSMITTED

| s[0] | s[1] | ········ | s[p-1] |

601

SIGNAL
VECTOR s

| s[0] |
| s[1] |
| ⋮ |
| s[p-1] |

602

INNER PRODUCT
VALUE VECTOR w

| w[0] |
| w[1] |
| ⋮ |
| w[p-1] |

603

OUTGOING
SIGNAL

| w[0] | w[1] | ········ | w[p-1] |

604
651

INCOMING
SIGNAL

| u[0] | u[1] | ········ | u[p-1] |

652
605

RECEIVED VALUE
VECTOR u

| u[0] |
| u[1] |
| ⋮ |
| u[p-1] |

606

INNER PRODUCT
VALUE VECTOR v

| v[0] |
| v[1] |
| ⋮ |
| v[p-1] |

607

SIGNAL THAT HAS
BEEN TRANSMITTED

| v[0] | v[1] | ········ | v[p-1] |

608

## INTERNATIONAL SEARCH REPORT

| | International application No. |
|---|---|
| | PCT/JP2008/062865 |

A.  CLASSIFICATION OF SUBJECT MATTER
*H04J11/00*(2006.01)i, *H04B1/707*(2006.01)i

According to International Patent Classification (IPC) or to both national classification and IPC

B.  FIELDS SEARCHED

Minimum documentation searched (classification system followed by classification symbols)
H04J11/00, H04B1/707

Documentation searched other than minimum documentation to the extent that such documents are included in the fields searched
Jitsuyo Shinan Koho          1922-1996   Jitsuyo Shinan Toroku Koho    1996-2008
Kokai Jitsuyo Shinan Koho    1971-2008   Toroku Jitsuyo Shinan Koho    1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | WO 2008/081871 A1  (Ken UMENO),<br>10 July, 2008 (10.07.08),<br>Full text; all drawings<br>(Family: none) | 1-11 |
| A | JP 2000-338869 A  (Director General of Communications Research Laboratory),<br>08 December, 2000 (08.12.00),<br>Full text; all drawings<br>& US 6654404 B1 | 1-11 |

☒  Further documents are listed in the continuation of Box C.          ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 October, 2008 (06.10.08) | 14 October, 2008 (14.10.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/062865

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-292129 A  (Communications Research Laboratory), 19 October, 2001 (19.10.01), Full text; all drawings & EP 1148644 A2          & JP 3314181 B2 & CA 2342542 A1          & US 2002/0041623 A1 & US 7099366 B2          & US 2007/0098054 A1 | 1-11 |
| A | JP 2005-203929 A  (Japan Science and Technology Agency), 28 July, 2005 (28.07.05), Full text; all drawings & JP 3799355 B2 | 1-11 |
| A | JP 2004-147126 A  (Osaka Industrial Promotion Organization), 20 May, 2004 (20.05.04), Full text; all drawings & JP 4073753 B2 | 1-11 |
| A | Eiji OKAMOTO, Yasunori IWANAMI, "Chaos Fugoka Hencho Hoshiki no Fukugo Tokusei Kaiseki ni Kansuru Ichikento", IEICE Technical Report, 27 February, 2008 (27.02.08), Vol.107, No.518, pages 199 to 204 | 1-11 |
| A | JP 2007-202091 A  (ChaosWare Inc.), 09 August, 2007 (09.08.07), Full text; all drawings (Family: none) | 1-11 |
| A | JP 2005-210664 A  (ChaosWare Inc.), 04 August, 2005 (04.08.05), Full text; all drawings (Family: none) | 1-11 |
| A | JP 2005-204267 A  (ChaosWare Inc.), 28 July, 2005 (28.07.05), Full text; all drawings (Family: none) | 1-11 |

Form PCT/ISA/210 (continuation of second sheet) (April 2007)

**EP 2 302 825 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002290274 A